# FASCICULE DE BREVET EUROPEEN

(11) **EP 4 281 658 B1**
(45) Date de publication et mention de la délivrance du brevet: **19.02.2025**
(21) Numéro de dépôt: 21824631.2
(22) Date de dépôt: 30.11.2021
(51) Int. Cl.: F02C 3/14

(54) **PROCÉDÉ DE COMBUSTION D'UNE TURBOMACHINE COMPRENANT DEUX CHAMBRES DE COMBUSTION**
VERBRENNUNGSVERFAHREN FÜR EINE TURBOMASCHINE MIT ZWEI BRENNKAMMERN
COMBUSTION PROCESS FOR A TURBOMACHINE COMPRISING TWO COMBUSTION CHAMBERS

(30) Priorité: 25.01.2021 FR 2100653
(43) Date de publication de la demande: 29.11.2023
(73) Titulaire: Stellantis Auto SAS, 78300 Poissy (FR)
(72) Inventeur: BOU NADER, Wissam, 91120 PALAISEAU (FR); DUMAND, Clement, 91300 MASSY (FR)
(74) Mandataire: PSIP
(86) Numéro de dépôt international: PCT/FR2021/052136
(87) Numéro de publication internationale: WO 2022/157430

(56) Documents cités:
- FR-A1- 3 083 595
- FR-A1- 3 087 486
- US-A1- 2015 337 741
- US-B2- 9 624 830

## Description

La présente invention revendique la priorité de la demande française N°2100653 déposée le 25.01.2021.

La présente invention se rapporte aux domaine des turbines à gaz. L'invention concerne plus particulièrement un procédé de combustion turbomachine comprenant deux chambres de combustion.

Les convertisseurs d'énergie de type turbine à gaz sont connues dans la production d'électricité. Ces machines comprennent un compresseur qui comprime l'air et augmente sa pression, une chambre de combustion qui utilise un carburant et produit de l'énergie thermique et une turbine qui sert à récupérer le travail des gaz. Une partie de la puissance produite par la turbine sert pour entraîner le compresseur et une autre partie pour entraîner un générateur électrique et produire de la puissance électrique. Dans le cas d'une application automobile, cette électricité peut servir à recharger la batterie de traction d'un véhicule électrique ou hybride.

Afin de réduire les émissions polluantes provenant des véhicules à moteur, il est connu de l'art antérieur d'incorporer une turbine à gaz dans les systèmes de propulsion des véhicules hybrides. Pour se mouvoir, les véhicules hybrides utilisent soit l'énergie provenant d'un moteur thermique, ce dernier étant alimenté par un carburant, tel que le gasoil, l'essence, l'éthanol, le méthanol ou le gaz naturel, soit l'énergie électrique. L'énergie électrique peut être directement produite par un système de production d'électricité intégré au véhicule ou provenir de la batterie intégrée au véhicule. Certains véhicules hybrides sont également rechargeables. Les turbogénérateurs, par exemple composés d'une turbine à gaz et d'une génératrice d'électricité, ont ainsi pour rôle de produire cette énergie électrique et permettent de diminuer les émissions de dioxyde de carbone et d'autres polluants atmosphériques tels que les oxydes d'azote. Le cycle de Brayton est un cycle thermodynamique mettant en oeuvre une turbine à gaz. Il présente des performances remarquables en termes de réduction de rejets polluants. Certains cycles thermodynamiques de ces convertisseurs comprenant plusieurs étages de compression et de détente permettent d'atteindre des rendements ainsi que des densités de puissance très importants. Une telle turbine à gaz utilisant ce cycle est connue par exemple du document FR3087486A1. D'autres turbines à gaz de l'art antérieur sont connues des documents US2013092755 A1, US2017058829 A1 et US2009314887 A1.

Par ailleurs, les normes environnementales imposent des limitations drastiques sur l'émission des polluants des véhicules. Afin de maitriser ces émissions, Celles-ci sont traitées dans un système de dépollution. Or, ce système de dépollution est complexe et coûteux, car il comprend classiquement un catalyseur. Par exemple, pour réduire les émissions d'oxyde d'azote, NOx, d'oxyde de carbone, CO, et d'hydrocarbures imbrûlés, HC sur un moteur à combustion interne, nous avons besoin d'un catalyseur 3 voies. Ce catalyseur contient un revêtement contenant des matériaux rares tels que le rhodium pour traiter les oxydes d'azote, NOx, le palladium et la platine pour traiter l'oxyde de carbone, CO, et les hydrocarbures imbrûlés, HC. Le coût de ces matériaux rares utilisés est en plein explosion, notamment le coût du rhodium qui sert comme catalyseur pour les oxydes d'azote, NOx.

Ainsi, il faut trouver une solution pour couper les émissions d'oxydes d'azote, NOx, à la source pour éviter l'usage de ces matériaux. Seulement, en combustion, couper les émissions d'oxydes d'azote NOx, pénalise classiquement les émissions d'oxyde de carbone, CO, et d'hydrocarbures imbrûlés, HC de CO et HC. Ainsi, il faut trouver un moyen de réduire les NOx, mais aussi les CO et les HC.

L'invention vise à résoudre les problèmes rencontrés dans l'art antérieur en proposant un procédé de combustion d'un ensemble comprenant :
- une première turbine de détente de gaz, une première chambre de combustion et un compresseur d'air, la première turbine de détente à gaz étant alimentée par tous les gaz issus de la chambre de combustion, le compresseur alimentant en air la première chambre de combustion,
- une seconde chambre de combustion alimentée par tous les gaz issus de la détente dans la première turbine de détente de gaz, une seconde turbine de détente à gaz alimentée par les gaz de combustion de la seconde chambre de combustion,
et dans lequel :
- on réalise dans la première chambre de combustion une combustion réglée pour limiter les émissions d'oxyde d'azote, sans contrainte sur le monoxyde de carbone et les hydrocarbures imbrûlés,
- on réalise dans la seconde chambre de combustion une combustion réglée pour réduire le monoxyde de carbone et les hydrocarbures imbrûlés.

L'effet technique est d'obtenir une turbomachine permettant une réduction efficace à la fois des oxyde d'azote, du monoxyde de carbone et les hydrocarbures imbrûlés sans catalyseur de dépollution.

Diverses caractéristiques supplémentaires peuvent être prévues, seules ou en combinaisons :
Selon une réalisation, l'ensemble opère sur un point de fonctionnement fixe prédéterminé.

Selon une réalisation, la première chambre de combustion est une chambre dite double flux dans laquelle le débit d'air issu du compresseur est séparé en deux avec une partie du débit participant à la combustion comme comburant, et la partie restante du débit qui ne participe pas à la combustion.

Selon une réalisation, la seconde chambre de combustion est une chambre dite simple flux dans laquelle tous les gaz de combustion issus de la première chambre de combustion et la partie du débit d'air n'ayant pas participé à la combustion dans la première chambre de combustion sont mélangés pour participer à la combustion dans cette seconde chambre de combustion.

Selon une réalisation, les gaz sortant de la seconde turbine sont envoyés dans un échangeur thermique pour réchauffer l'air sortant du compresseur avant son entrée dans la première chambre de combustion.

L'invention a aussi pour objet un ensemble comprenant :
- une première turbine de détente de gaz, une première chambre de combustion et un compresseur d'air, la première turbine de détente à gaz étant alimentée par tous les gaz issus de la chambre de combustion, le compresseur alimentant en air la première chambre de combustion,
- une seconde chambre de combustion alimentée par tous les gaz issus de la détente dans la première turbine de détente de gaz, une seconde turbine de détente à gaz alimentée par les gaz de combustion de la seconde chambre de combustion (CC2),
- des moyens d'injection de carburant dans chacune des chambres de combustion,
- des moyens de contrôle de la combustion dans les chambres de combustion,
caractérisé en ce que la première chambre de combustion est une chambre dite double flux, la seconde chambre de combustion une chambre dite simple flux, et en ce que les moyens de contrôle de la combustion sont agencés de sorte à piloter une combustion dans la première chambre de combustion réglée pour limiter les émissions d'oxyde d'azote, sans contrainte sur le monoxyde de carbone et les hydrocarbures imbrûlés et piloter une combustion dans la seconde chambre de combustion réglée pour réduire le monoxyde de carbone et les hydrocarbures imbrûlés.

Selon une réalisation, le compresseur est un compresseur radial et les turbines sont des turbines radiales.

Selon une réalisation, l'ensemble comprend un générateur d'électricité relié de sorte à récupérer de l'énergie mécanique produit par au moins un élément parmi la première turbine, la seconde turbine.

L'invention a aussi pour objet un véhicule automobile comprenant un moteur électrique de traction alimenté par une batterie de traction, et l'ensemble de l'invention comportant un tel générateur, ce générateur alimentant la batterie de traction.

D'autres particularités et avantages apparaîtront à la lecture de la description ci-après d'un mode particulier de réalisation, non limitatif de l'invention, faite en référence aux figures dans lesquelles :
[Fig 1] : La figure 1 représente schématiquement un véhicule automobile conforme à l'invention.
[Fig 2] : La figure 2 représente schématiquement un mode de réalisation d'un ensemble conforme à l'invention.
[Fig 3] : La figure 3 représente schématiquement un autre mode de réalisation d'un ensemble conforme à l'invention.

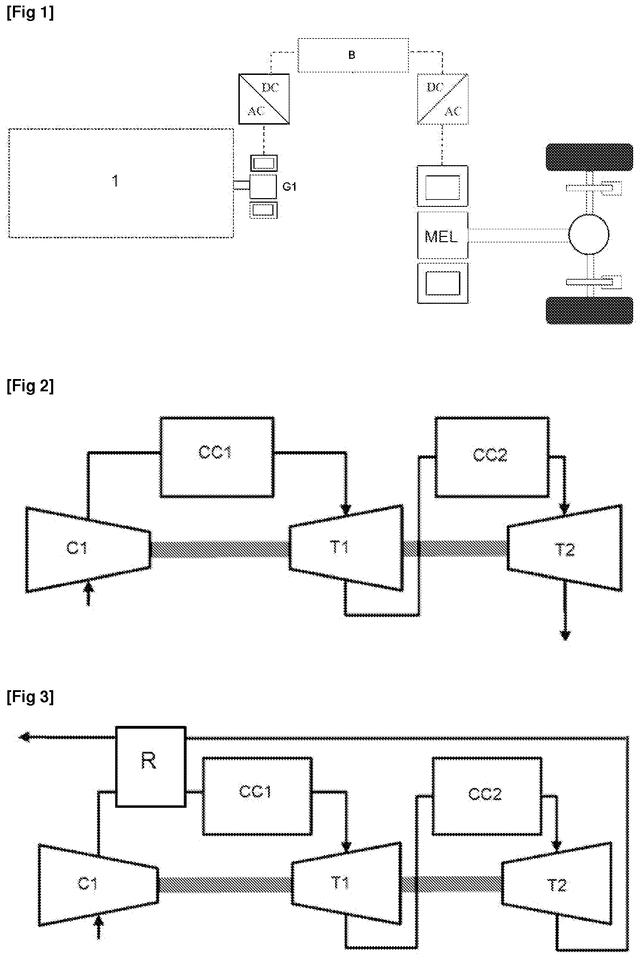

La figure 1 présente un véhicule automobile comprenant dans le cadre en pointillé un ensemble 1 de l'invention.

Un générateur d'électricité G1 est lié cet ensemble 1 de sorte à convertir l'énergie mécanique produite par cet ensemble en courant électrique.

Le générateur G1 est relié à un réseau électrique comprenant une batterie B et un moteur électrique MEL servant à la traction du véhicule. Des convertisseurs électriques AC/DC peuvent être prévus pour la gestion des flux électriques dans le réseau électrique. Ainsi, le générateur G1 peut recharger la batterie B. La batterie B est utilisée pour alimenter le moteur électrique MEL de traction. L'ensemble 1 est ainsi mécaniquement découplé de la chaîne de traction peut fonctionner sur son point de rendement maximal.

La figure 2 présente un exemple de réalisation de l'ensemble 1 désigné à la figure 1. Cet ensemble donc une première turbine, T1. Cette turbine T1 de détente de gaz est alimentée par les gaz de combustion produits dans une première chambre de combustion, CC1. Cette turbine T1 est également reliée à un compresseur C1 d'air qu'elle entraîne en rotation. Le compresseur d'air C1 alimente la chambre de combustion CC1 en air sous pression. Cet air sous pression est brûlé avec un carburant injecté dans la chambre de combustion C1 pour produire les gaz de combustion qui sont envoyés dans la turbine T1. Pour des raisons de compacité, on prévoir un compresseur C1 radial. Pour les mêmes raisons de compacité on peut prévoir des turbines T1, T2 radiales.

Le générateur d'électricité G1 est relié à l'ensemble de sorte à récupérer de l'énergie mécanique produit par au moins un des éléments parmi le compresseur, C1, la première turbine, T1 ou la seconde turbine, T2.

Dans ce mode de réalisation, les gaz de combustion ayant été détendus dans la première turbine T1, sont introduits, de préférence directement, dans une seconde chambre de combustion CC2 pour brûler avec du carburant injecté dans la seconde chambre de combustion CC2.

Dans la première chambre de combustion CC1, il est prévu de réaliser une combustion réglée pour obtenir une faible émission de NOx, donc une combustion homogène à faible température, générant de NOx < 10 ppm pour être compatible avec les normes environnementales notamment la norme €7, en libérant la contrainte sur le monoxyde de carbone, CO, et les hydrocarbures imbrûlés, HC.

L'ensemble comprend encore des moyens d'injection, non représentés, de carburant dans chacune des chambres de combustion, CC1 et CC2.

L'ensemble comprend encore des moyens de contrôle de la combustion dans les chambres de combustion CC1, CC2, tel qu'un calculateur électronique. Ce calculateur électronique comprend les moyens d'acquisition, de traitement par instructions logicielles stockées dans une mémoire ainsi que les moyens de commande requis au pilotage de la combustion telle que décrite après.

Pour obtenir une telle faible émission de NOx, on peut utiliser une chambre de combustion dite double flux. Dans une telle chambre de combustion le débit d'air, mₜₒₜₐₗ, issu du compresseur, C1, est séparé en deux, un premier débit, mₐᵢᵣ₁, participant à la combustion comme comburant, le reste du débit, mₐᵢᵣ₂, ne participant pas à la combustion (On a mₜₒₜₐₗ = mₐᵢᵣ₁+ mₐᵢᵣ₂).

Le fait de séparer le débit d'air en deux permet de contrôler le débit qui passe dans la première chambre de combustion, CC1, et qui participe effectivement à la combustion. Dans ce cas nous avons la possibilité d'effectuer une combustion stoechiométrique et globalement homogène. Il est connu qu'une combustion type riche permet de réduire les émissions de NOx. En effet, dans de cas, la combustion va consommer tout l'oxygène, O₂, disponible et donc il ne restera pas d'oxygène, O₂ pour réagir avec l'azote, N₂, pour former les oxyde d'azote NOx, les NOx étant le N₂O, le NO, le NO₂, formés lorsque la molécule de N₂ rencontre une molécule de O₂ à haute température selon le diagramme de Pischinger. Il y a donc deux conditions possibles pour former les NOx : la première est une haute température de combustion et la seconde est la présence d'oxygène, O₂ et d'azote, N₂.

Nous avons donc également la possibilité d'effectuer une combustion homogène pauvre Dans ce cas, la production de NOx est évitée en raison d'une température de combustion insuffisante pour générer des NOx (< 1300°C localement selon le diagramme de Pischinger).

En sortie de la première chambre de combustion CC1, les gaz de combustion et la partie de l'air, mₐᵢᵣ₂, n'ayant pas participé à la combustion se mélangent. Ces gaz de combustion contiennent très peu d'oxyde d'azote, mais surtout les produits de combustion : dioxyde de carbone, CO₂, eau H₂O, monoxyde de carbone, CO, hydrocarbures imbrûlés, HC. Le monoxyde de carbone, CO et les hydrocarbures imbrûlés, HC se forment suite à une combustion incomplète (manque d'oxygène).

Le nouveau mélange entre dans la première turbine T1 où il effectue une première détente. Ensuite, en sortie de première turbine T1, ce mélange entre dans la seconde chambre de combustion CC2.

La deuxième chambre de combustion, CC2, est une chambre de combustion dite simple flux où tout le débit de gaz issu de la sortie de première turbine T1, se trouve ainsi dans la deuxième chambre de combustion CC2 pour participer à la combustion dans la deuxième chambre de combustion, CC2.

Ainsi, la deuxième chambre de combustion CC2 contient 100% des produits de combustion de la première chambre de combustion CC1.

Ces produits de combustion sont : dioxyde de carbone, CO₂, eau H₂O, oxydes d'azote, le peu de NOx issus de la première chambre de combustion, monoxyde de carbone, CO, hydrocarbures imbrûlés, HC, diazote, N2, et dioxygène, O2.

Dans cette deuxième chambre de combustion CC2, la combustion est réglée pour réduire le monoxyde de carbone, CO, et les hydrocarbures imbrûlés, HC. Dans cette deuxième chambre de combustion CC2, le monoxyde de carbone, CO, et les hydrocarbures imbrûlés, HC, seront réduits grâce à l'excès d'oxygène amené par le débit d'air, mₐᵢᵣ₂, n'ayant pas participé à la combustion dans la première chambre de combustion.

De plus, sachant qu'on a un mélange avec des molécules triatomiques, CO₂, H₂O, issues des gaz de combustion, ces molécules triatomiques, possèdent une chaleur spécifique plus importante, donc elles vont absorber la chaleur et baisser la température après une seconde combustion. Ainsi, il sera possible d'effectuer une seconde combustion naturellement avec très peu d'oxyde d'azote, NOx, car la baisse de la température empêche la formation de d'oxyde d'azote. Le CO et le HC vont brûler avec l'excès d'O₂ et seront naturellement réduit.

Afin d'optimiser le fonctionnement et simplifier la dépollution, on peut prévoir de faire opérer l'ensemble sur un point de fonctionnement fixe prédéterminé.

Ainsi, ce couplage entre chambre de combustion double flux et chambre de combustion simple flux permet de réduire à la fois les émissions du NOx, le CO et le HC de la machine.

La figure 3 présente un autre mode de réalisation dans lequel l'ensemble comprend encore un récupérateur R. Le récupérateur R est un échangeur de chaleur entre l'air sortant du compresseur C1, avant son entrée dans la première chambre de combustion CC1, et les gaz de combustion en sortie de la seconde turbine, T2, permettant de réchauffer cet air. En effet, l'utilisation du récupérateur permet d'augmenter la température en entrée de la première chambre de combustion, CC1, et ainsi, diminuer le débit mₐᵢᵣ1 et augmenter le débit mₐᵢᵣ2. Cela a pour conséquence, de consommer très peu d'oxygène dans la première chambre de combustion, CC1. L'oxygène restant permet ainsi d'augmenter l'efficacité de traitement des CO et HC dans la seconde chambre de combustion, CC2.

L'avantage d'utiliser une turbine à gaz est qu'elle est compatible avec de nouveaux vecteurs d'énergie tels que des nouveaux carburants issus de la biomasse, des carburants gazeux, des carburant solides type aluminium, magnésium, fer, poudre... qui ne peuvent pas être utilisés dans les moteurs à combustion interne classiques. Le concept proposé permet de réduire au final tous les polluants (NOx, CO et HC) en travaillant sur la combustion dans chaque chambre de combustion. Le fait d'avoir deux chambres de combustion permet d'optimiser les oxyde d'azote, NOx, et de libérer la contrainte sur le monoxyde de carbone, CO, et les hydrocarbures imbrûlés, HC, dans la première chambre de combustion, puis de réduire les CO et HC dans la deuxième chambre de combustion. La deuxième chambre de combustion contribue également à éviter les NOx grâce à la présence de gaz de combustion issus de la première chambre de combustion ce qui fait un effet analogue à de la recirculation de gaz d'échappement.

L'invention permet de réduire à la source les émissions d'oxyde d'azote, NOx, de monoxyde de carbone, CO, et d'hydrocarbures imbrûlés, HC, d'un ensemble à turbine à gaz. Un tel ensemble à turbine à gaz est un moyen d'hybrider la batterie d'un véhicule électrique. Le but étant de proposer un véhicule avec toutes les prestations d'un véhicule électrique (faible pas de maintenance, pas de bruit, pas de vibrations, ...) mais à faible coût, le coût de l'ensemble à turbine à gaz restant plus faible que le coût des batteries, offrant une autonomie supérieure grâce à la densité énergétique des carburants qui est plus importante que cette des batteries, et avec un faible impact environnemental et ne nécessitant aucun matériau rare utilisé pour les catalyseurs tels que le rhodium, le palladium ou encore le platine.

## Revendications

1. Procédé de combustion d'un ensemble comprenant :
- une première turbine de détente de gaz (T1), une première chambre de combustion (CC1) et un compresseur d'air (C1), la première turbine de détente à gaz (T1) étant alimentée par tous les gaz issus de la chambre de combustion (CC1), le compresseur (C1) alimentant en air la première chambre de combustion (CC1),
- une seconde chambre de combustion (CC2) alimentée par tous les gaz issus de la détente dans la première turbine de détente de gaz (T1), une seconde turbine de détente à gaz (T2) alimentée par les gaz de combustion de la seconde chambre de combustion (CC2),
**caractérisé en ce que**
- on réalise dans la première chambre de combustion (CC1) une combustion réglée pour limiter les émissions d'oxyde d'azote (NOx), sans contrainte sur le monoxyde de carbone (CO) et les hydrocarbures imbrûlés (HC),
- on réalise dans la seconde chambre de combustion (CC2) une combustion réglée pour réduire le monoxyde de carbone (CO) et les hydrocarbures imbrûlés (HC).

2. Procédé selon la revendication 1, **caractérisé en ce qu'**il opère sur un point de fonctionnement fixe prédéterminé.

3. Procédé selon la revendication 1 ou la revendication 2, **caractérisé en ce que** la première chambre de combustion (CC1) est une chambre dite double flux dans laquelle le débit d'air issu du compresseur (C1) est séparé en deux avec une partie du débit participant à la combustion comme comburant, et la partie restante du débit qui ne participe pas à la combustion.

4. Procédé selon l'une quelconque des revendications précédentes, **caractérisé en ce que** la seconde chambre de combustion (CC2) est une chambre dite simple flux dans laquelle tous les gaz de combustion issus de la première chambre de combustion (CC1) et la partie du débit d'air n'ayant pas participé à la combustion dans la première chambre de combustion (CC1) sont mélangés pour participer à la combustion dans cette seconde chambre de combustion (CC2).

5. Procédé selon l'une quelconque des revendications précédentes, **caractérisé en ce que** les gaz sortant de la seconde turbine (T2) sont envoyés dans un échangeur thermique (R) pour réchauffer l'air sortant du compresseur avant son entrée dans la première chambre de combustion (CC1).

6. Ensemble comprenant :
- une première turbine de détente de gaz (T1), une première chambre de combustion (CC1) et un compresseur d'air (C1), la première turbine de détente à gaz (T1) étant alimentée par tous les gaz issus de la chambre de combustion (CC1), le compresseur (C1) alimentant en air la première chambre de combustion (CC1),
- une seconde chambre de combustion (CC2) alimentée par tous les gaz issus de la détente dans la première turbine de détente de gaz (T1), une seconde turbine de détente à gaz (T2) alimentée par les gaz de combustion de la seconde chambre de combustion (CC2),
- des moyens d'injection de carburant dans chacune des chambres de combustion (CC1, CC2),
- des moyens de contrôle de la combustion dans les chambres de combustion (CC1, CC2), **caractérisé en ce que** la première chambre de combustion (CC1) est une chambre dite double flux, la seconde chambre de combustion (CC2) une chambre dite simple flux, et **en ce que** les moyens de contrôle de la combustion sont agencés de sorte à piloter une combustion dans la première chambre de combustion (CC1) réglée pour limiter les émissions d'oxyde d'azote (NOx), sans contrainte sur le monoxyde de carbone (CO) et les hydrocarbures imbrûlés (HC) et piloter une combustion dans la seconde chambre de combustion (CC2) réglée pour réduire le monoxyde de carbone (CO) et les hydrocarbures imbrûlés (HC).

7. Ensemble selon la revendication précédente, **caractérisé en ce que** le compresseur (C1) est un compresseur radial et les turbines (T1, T2) sont des turbines radiales.

8. Ensemble selon la revendication 6 ou la revendication 7, **caractérisé en ce qu'**il comprend un générateur d'électricité (G1) relié de sorte à récupérer de l'énergie mécanique produit par au moins un élément parmi la première turbine (T1), la seconde turbine (T2).

9. Véhicule automobile comprenant un moteur électrique de traction (MEL) alimenté par une batterie de traction (B), **caractérisé en ce qu'**il comprend un ensemble selon la revendication précédente, le générateur (G1) alimentant la batterie de traction (B).

## Patentansprüche

1. Verfahren zur Verbrennung einer Baugruppe, umfassend:
- eine erste Gasexpansionsturbine (T1), eine erste Brennkammer (CC1) und einen Luftkompressor (C1), wobei die erste Gasexpansionsturbine (T1) von allen aus der Kammerbrennkammer (CC1) kommenden Gasen angetrieben wird Kompressor (C1), der der ersten Brennkammer (CC1) Luft zuführt,
- eine zweite Brennkammer (CC2), die von allen Gasen versorgt wird, die bei der Expansion in der ersten Gasexpansionsturbine (T1) entstehen, eine zweite Gasexpansionsturbine (T2), die von den Verbrennungsgasen der zweiten Brennkammer (CC2) versorgt wird,
**dadurch gekennzeichnet**
- Die Verbrennung erfolgt in der ersten Brennkammer (CC1), um die Stickoxidemissionen (NOx) zu begrenzen, ohne dass Kohlenmonoxid (CO) und unverbrannte Kohlenwasserstoffe (HC) eingeschränkt werden.
- In der zweiten Brennkammer (CC2) erfolgt eine kontrollierte Verbrennung zur Reduzierung von Kohlenmonoxid (CO) und unverbrannten Kohlenwasserstoffen (HC).

2. Verfahren nach Anspruch 1, **dadurch gekennzeichnet, dass** es auf einem vorgegebenen festen Arbeitspunkt arbeitet.

3. Verfahren nach Anspruch 1 oder Anspruch 2, **dadurch gekennzeichnet, dass** die erste Brennkammer (CC1) eine sogenannte Doppelstromkammer ist, in der der Luftstrom vom Kompressor (C1) mit einem Teilstrom in zwei Teile geteilt wird als Oxidationsmittel an der Verbrennung teilnimmt, und der verbleibende Teil der Strömung, der nicht an der Verbrennung teilnimmt.

4. Verfahren nach einem der vorhergehenden Ansprüche, **dadurch gekennzeichnet, dass** die zweite Brennkammer (CC2) eine sogenannte Single-Flow-Kammer ist, in der alle aus der ersten Brennkammer (CC1) kommenden Verbrennungsgase und der Teil der Luftströme, die nicht an der Verbrennung in der ersten Brennkammer (CC1) teilgenommen haben, werden gemischt, um an der Verbrennung in dieser zweiten Brennkammer (CC2) teilzunehmen.

5. Verfahren nach einem der vorhergehenden Ansprüche, **dadurch gekennzeichnet, dass** die die zweite Turbine (T2) verlassenden Gase zu einem Wärmetauscher (R) geleitet werden, um die den Kompressor verlassende Luft zu erwärmen, bevor sie in die erste Verbrennungskammer (CC1) eintritt.

6. Set bestehend aus:
- eine erste Gasexpansionsturbine (T1), eine erste Brennkammer (CC1) und einen Luftkompressor (C1), wobei die erste Gasexpansionsturbine (T1) von allen aus der Kammerbrennkammer (CC1) kommenden Gasen angetrieben wird Kompressor (C1), der der ersten Brennkammer (CC1) Luft zuführt,
- eine zweite Brennkammer (CC2), die von allen Gasen versorgt wird, die bei der Expansion in der ersten Gasexpansionsturbine (T1) entstehen, eine zweite Gasexpansionsturbine (T2), die von den Verbrennungsgasen der zweiten Brennkammer (CC2) versorgt wird,
- Kraftstoffeinspritzmittel in jede der Brennkammern (CC1, CC2),
- Mittel zur Steuerung der Verbrennung in den Brennkammern (CC1, CC2), **dadurch gekennzeichnet, dass** die erste Brennkammer (CC1) eine sogenannte Double-Flow-Kammer, die zweite Brennkammer (CC2) eine sogenannte Single-Flow-Kammer ist, und , dass die Verbrennungssteuermittel so angeordnet sind, dass sie die Verbrennung in der ersten Brennkammer (CC1) steuern, die so eingestellt ist, dass die Stickoxid-Emissionen (NOx) begrenzt werden, ohne dass das Kohlenmonoxid (CO) und die unverbrannten Kohlenwasserstoffe (HC) eingeschränkt werden, und dass sie die Verbrennung steuern in der zweiten Brennkammer (CC2) zur Reduzierung von Kohlenmonoxid (CO) und unverbrannten Kohlenwasserstoffen (HC) eingestellt.

7. Baugruppe nach dem vorhergehenden Anspruch, **dadurch gekennzeichnet, dass** der Verdichter (C1) ein Radialverdichter und die Turbinen (T1, T2) Radialturbinen sind.

8. Baugruppe nach Anspruch 6 oder Anspruch 7, **dadurch gekennzeichnet, dass** sie einen Stromgenerator (G1) umfasst, der so angeschlossen ist, dass er mechanische Energie zurückgewinnt, die von mindestens einem Element der ersten Turbine (T1) und der zweiten Turbine (T2) erzeugt wird.

9. Kraftfahrzeug mit einem elektrischen Traktionsmotor (MEL), der von einer Traktionsbatterie (B) gespeist wird, **dadurch gekennzeichnet, dass** es eine Baugruppe nach dem vorhergehenden Anspruch umfasst, wobei der Generator (G1) die Traktionsbatterie (B) mit Strom versorgt.

## Claims

1. Method for combustion of an assembly comprising:
- a first gas expansion turbine (T1), a first combustion chamber (CC1) and an air compressor (C1), the first gas expansion turbine (T1) being supplied by all the gases from the combustion chamber (CC1), the compressor (C1) supplying air to the first combustion chamber (CC1),
- a second combustion chamber (CC2) supplied by all the gases from the expansion in the first gas expansion turbine (T1), a second gas expansion turbine (T2) supplied by the combustion gases from the second combustion chamber (CC2),
**characterized in that**
- a combustion controlled to limit nitrogen oxide (NOx) emissions is carried out in the first combustion chamber (CC1), without constraints on carbon monoxide (CO) and unburned hydrocarbons (HC),
- a combustion controlled to reduce carbon monoxide (CO) is carried out in the second combustion chamber (CC2) and unburned hydrocarbons (HC).

2. Method according to claim 1, **characterized in that** it operates on a predetermined fixed operating point.

3. Method according to claim 1 or claim 2, **characterized in that** the first combustion chamber (CC1) is a so-called double-flow chamber in which the air flow from the compressor (C1) is split into two with a part of the flow participating in the combustion as oxidant, and the remaining part of the flow which does not participate in the combustion.

4. Method according to any one of the preceding claims, **characterized in that** the second combustion chamber (CC2) is a so-called single-flow chamber in which all the combustion gases from the first combustion chamber (CC1) and the part of the air flow not having participated in the combustion in the first combustion chamber (CC1) are mixed to participate in the combustion in this second combustion chamber (CC2).

5. Method according to any one of the preceding claims, **characterized in that** the gases leaving the second turbine (T2) are sent into a heat exchanger (R) to heat the air leaving the compressor before it enters the first combustion chamber (CC1).

6. Assembly comprising:
- a first gas expansion turbine (T1), a first combustion chamber (CC1) and an air compressor (C1), the first gas expansion turbine (T1) being supplied by all the gases from the combustion chamber (CC1), the compressor (C1) supplying air to the first combustion chamber (CC1),
- a second combustion chamber (CC2) supplied by all the gases from the expansion in the first gas expansion turbine (T1), a second gas expansion turbine (T2) supplied by the combustion gases from the second combustion chamber (CC2),
- means for injecting fuel into each of the combustion chambers (CC1, CC2),
- means for controlling the combustion in the combustion chambers (CC1, CC2), **characterized in that** the first combustion chamber (CC1) is a so-called double-flow chamber, the second combustion chamber (CC2) a so-called single-flow chamber, and **in that** the combustion control means are arranged so as to control a combustion in the first combustion chamber (CC1) set to limit nitrogen oxide (NOx) emissions, without constraint on carbon monoxide (CO) and unburned hydrocarbons (HC) and control a combustion in the second combustion chamber (CC2) set to reduce carbon monoxide (CO) and unburned hydrocarbons (HC).

7. Assembly according to the preceding claim, **characterized in that** the compressor (C1) is a radial compressor and the turbines (T1, T2) are radial turbines.

8. Assembly according to claim 6 or claim 7, **characterized in that** it comprises an electricity generator (G1) connected so as to recover mechanical energy produced by at least one element among the first turbine (T1), the second turbine (T2).

9. Motor vehicle comprising an electric traction motor (MEL) powered by a traction battery (B), **characterized in that** it comprises an assembly according to the preceding claim, the generator (G1) powering the traction battery (B).
